# EUROPÄISCHE PATENTANMELDUNG

(11) **EP 2 177 107 A1**
(43) Veröffentlichungstag der Anmeldung: **21.04.2010**
(21) Anmeldenummer: 08018106.8
(22) Anmeldetag: 16.10.2008
(51) Int. Cl.: A01N 25/06, A01N 37/02, A01N 37/04, A01N 37/36, A01P 7/02

(54) **Ungezieferbekämpfung**

(71) Anmelder: Engel, Thomas, 76530 Baden Baden (DE)
(72) Erfinder: Engel, Thomas, 76530 Baden Baden (DE)

(57) **Zusammenfassung**

Es wird ein Verfahren zur Ungezieferbekaempfung beschrieben wobei in Fluessigkeit geloeste Kristalle und/oder andere Agenzien mithilfe von Piezoelektrik zu Nebel zerstaeubt werden der sich auf Bienen oder im Korb rekristallisiert oder niederschlaegt und damit den Putztrieb der Tiere verstaerkt sodass Ungeziefer abgestreift oder getoetet wird.

Sie werden aufgefordert, den Mangel/die Mängel innerhalb von zwei Monaten nach Zustellung dieser Mitteilung zu beseitigen.

Wird der festgestellte Mangel/Werden die festgestellten Mängel nicht rechtzeitig beseitigt, so wird die europäische Patentanmeldung nach Artikel 90 (5) EPÜ zurückgewiesen.

Die Beschreibung, die Patentansprüche und die Zeichnungen können nur insoweit geändert werden, als es erforderlich ist, den oben genannten Mangel/die oben genannten Mängel zu beseitigen.

## Beschreibung

Die Bekaempfung von Ungeziefer an Insekten ist von zunenmender Bedeutung.So sind zum Beispiel im Jahre 2007 1 Million Bienenvoelkerker allein in Deutschland durch die VARROA Milben vernichtet worden.Bekannte Behandlung mit Chemikalien wie Ameisensaeure,Milchsaeure haben nur geringen Erfolg.Darueberhinaus ist der Umgang mit diesen Chemikalien fuer den Imker mit Gefahren verbunden. (Siehe Arbeitsgemeinschaft der Institute fuer Bienenforschung E.V.)

Es wurde nun ein Verfahren gefunden welches diese Gefahren weitgehend ausschliesst und darueberhinaus den genetischen Putztrieb der Insekten verstaerkt sodass sie die Parasiten von sich aus mechanisch abstreifen.

Dies geschieht dadurch das mithilfe von Piezoelektrik die Chemikalien in feinste Partikel von Teilchengroasse von etwa 4.2 Micron gezielt dosiert zerstaeubt werden sodass ein Nebel entsteht durch den die Biene am Eingangsloch des Korbes hindurch fliegt und somit gleichmaessig benetzt wird.Dieser Nebel kann aber auch gezielt direkt in den Bienenkorb eingeleitet werden sodass auch die Waben behandelt werden.

Diesen Fluessigkeiten koennen aber auch in Fluessigkeit geloeste Kristalle beigefuegt werden die beim Abtrocknen rekristallisieren und somit auf der Oberflaeche der Biene Partikel bilden die sie als Fremdkoerper empfindet und somit versucht sie abzuputzen sodass die Milbe abfaellt. Der Zusatz von Tensiden zur Reduzierung der Oberflaechenspannung kann dabei sehr vorteilhaft sein.

## Patentansprüche

1. Verfahren zur Ungezieferbekaempfung **dadurch gekennzichnet das** mithilfe von Piezoelektrik an sich bekannte Chemikalien gezielt vernebelt werden der die Parasiten abtoetet.

2. Verfahren gemaess Anspruch 1. **dadurch gekennzeichnet das** es ich bei den Chemikalien um Ameisensaeure,Milchsaeure,Oxalsaeure und aehnlichem und oder aber auch um Mischungen daraus handelt.

3. Gemaess Anspruch 1. und 2. **gekennzeichnet dadurch** das in Fluessigkeit geloeste Kristalle vernebelt werden deren rekristallisierte Ruckstaende sich nach Verdampfen auf dem Insekt anlagern.Tenside zur Reduzierung der Oberflaechenspannung sind dabei hilfreich.

4. Gemaess Anspruch 1.- 3. **gekennzeichnet dadurch** das es sich um Kristalle wie zum Beispiel Saccahrin,Resorcin,Sulfate wie Zinksulfat und aehnlichem oder auch um Mischungen daraus handelt.

5. Gemaess Anspruch 1.- 4. **dadurch gekennzeichnet das** die Gemische als Medikament hergestellt und auch fuer den menschlichen Koerper geeignet sind.
